(19) **Europäisches Patentamt / European Patent Office / Office européen des brevets**

(11) **EP 3 698 274 B1**

(12) **FASCICULE DE BREVET EUROPEEN**

(45) Date de publication et mention de la délivrance du brevet:
**29.01.2025 Bulletin 2025/05**

(21) Numéro de dépôt: **18785974.9**

(22) Date de dépôt: **18.10.2018**

(51) Classification Internationale des Brevets (IPC):
**G06V 10/44** *(2022.01)*     **G06V 10/46** *(2022.01)*
**G06V 40/16** *(2022.01)*

(52) Classification Coopérative des Brevets (CPC):
**G06V 40/165; G06V 10/457; G06V 10/462;**
G06V 10/467

(86) Numéro de dépôt international:
**PCT/EP2018/078518**

(87) Numéro de publication internationale:
**WO 2019/077026 (25.04.2019 Gazette 2019/17)**

(54) **PROCEDE DE CALCUL D'UN DESCRIPTEUR GLOBAL D'UNE IMAGE**

VERFAHREN ZUR BERECHNUNG EINES GLOBALEN DESKRIPTORS EINES BILDES

METHOD FOR CALCULATING A GLOBAL DESCRIPTOR OF AN IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2017 FR 1759814**

(43) Date de publication de la demande:
**26.08.2020 Bulletin 2020/35**

(73) Titulaire: **Commissariat à l'Energie Atomique et aux Energies Alternatives**
**75015 Paris (FR)**

(72) Inventeurs:
• **BOUSEFSAF, Frédéric**
  **57070 Metz (FR)**
• **MICHEL, Rémi**
  **91400 Orsay (FR)**
• **TAMAAZOUSTI, Mohamed**
  **92140 Clamart (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **MATTI PIETIKÄINEN ET AL: "Computer Vision using Local Binary Patterns", 1 January 2011, SPRINGER, ISBN: 978-0-85729-747-1, pages: 13 - 47, XP002717153**
• **PIETIKAINEN M ET AL: "Rotation-invariant texture classification using feature distributions", PATTERN RECOGNIT, ELSEVIER, GB, vol. 33, no. 1, 1 January 2000 (2000-01-01), pages 43 - 52, XP004243912, ISSN: 0031-3203, DOI: 10.1016/S0031-3203(99)00032-1**
• **OJALA T. ET AL: "Multiresolution gray-scale and rotation invariant texture classification with local binary patterns", IEEE TRANSACTIONS ON PATTERN ANALYSIS AND MACHINE INTELLIGENCE, IEEE COMPUTER SOCIETY, USA, vol. 24, no. 7, 1 July 2002 (2002-07-01), pages 971 - 987, XP011094543, ISSN: 0162-8828, DOI: 10.1109/TPAMI.2002.1017623**
• **MARKO HEIKKILÄ ET AL: "Description of Interest Regions with Center-Symmetric Local Binary Patterns", 1 January 2007, COMPUTER VISION, GRAPHICS AND IMAGE PROCESSING LECTURE NOTES IN COMPUTER SCIENCE;;LNCS, SPRINGER, BERLIN, DE, PAGE(S) 58 - 69, ISBN: 978-3-540-68301-8, XP019053058**

- **POREBSKI A ET AL: "Haralick feature extraction from LBP images for color texture classification", IMAGE PROCESSING THEORY, TOOLS AND APPLICATIONS, 2008. IPTA 2008. FIRST WORKSHOPS ON, IEEE, PISCATAWAY, NJ, USA, 23 November 2008 (2008-11-23), pages 1 - 8, XP031404051, ISBN: 978-1-4244-3321-6**

- **JEAN-PHILIPPE GAGNON: "Colliers et bracelets dont les perles importent peu - Mémoire de maîtrise en informatique", 1 June 2006, UNIVERSITÉ DE LAVAL, Québec, pages: 1 - 112, XP055488982**

**Description**

La présente invention concerne le domaine de l'extraction et de l'analyse de motifs ou caractéristiques visuelles dans une image, une partie d'une image ou une séquence de plusieurs images. L'invention concerne notamment le domaine de la vision par ordinateur et porte plus précisément sur un procédé de calcul d'un descripteur global d'une image.

Un descripteur global d'une image a pour fonction de caractériser l'information contenue dans l'image, par exemple les propriétés générales de la scène de l'image. Il peut être constitué de descripteurs locaux correspondants chacun à un pixel de l'image parmi tous les pixels de l'image, d'une partie de l'image ou d'un ensemble de points d'intérêts de l'image.

L'élaboration de descripteurs d'image est couramment utilisée dans le domaine de la vision par ordinateur, notamment pour des applications de reconnaissance d'objets (de visages par exemple), de classification ou d'analyse de contenu.

L'invention est applicable à tout type d'image numérique et en particulier aux images multi-spectrales dont chaque pixel comporte plusieurs composantes à différentes longueurs d'onde. L'invention est aussi applicable à des images à trois composantes dites RGB.

De nombreuses méthodes de calcul de descripteurs sont disponibles dans la littérature. On peut citer notamment le descripteur SURF « Speeded Up Robust Features » décrit dans la demande de brevet européenne EP 1850270, le descripteur SIFT « Scale Invariant Feature Transform » décrit dans le brevet américain US6711293 ou encore le descripteur LBP « Local Binary Patterns » décrit notamment dans la référence [1]. Les documents « Computer Vision using Local Binary Patterns, Matti Pietikainen et al », « Multiresolution gray-scale and rotation invariant texture classification with local binary patterns, Ojala T et al » et « Rotation-invariant texture classification using feature distributions », 2000 décrivent des variantes du descripteur LBP.

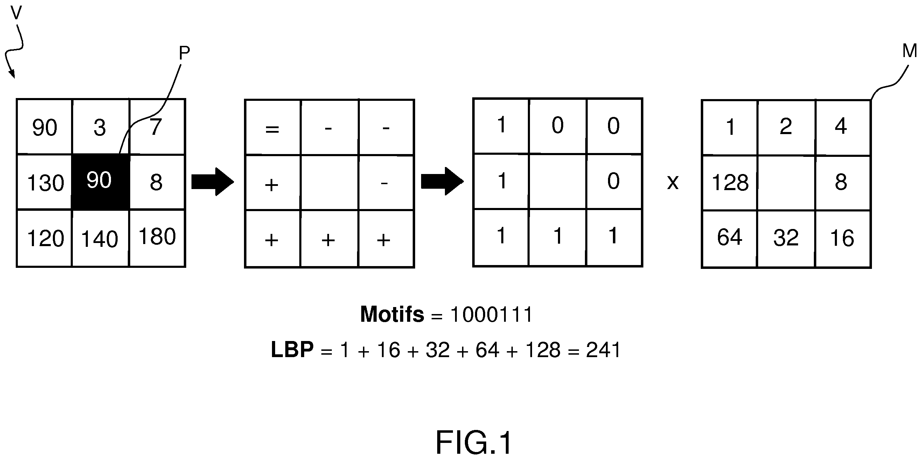

La figure 1 schématise le principe de la méthode de calcul d'un descripteur LBP selon l'état de l'art. Un descripteur local est calculé pour chaque pixel de l'image ou d'une partie de l'image. La première étape de la méthode consiste à définir un voisinage V autour du pixel, par exemple un bloc de 3x3 pixels autour d'un pixel central P. Les huit pixels entourant le pixel central $P_0$ forment une boucle qui est parcourue dans un sens choisi par convention. Chaque pixel de la boucle est comparé avec le pixel central et on lui affecte respectivement le signe « = », «-» ou « + » selon que sa valeur est égale, inférieure ou supérieure à celle du pixel central. On encode ensuite ce résultat en affectant au signe «-» la valeur 0 et aux signes « = » et « + » la valeur 1. On multiplie ensuite ce résultat par une matrice de pondération M qui comporte, pour chaque pixel parcouru dans l'ordre initialement choisi, une puissance de deux incrémentée à chaque nouveau pixel. Le résultat de cette multiplication donne le descripteur local du pixel central $P_0$ qui vaut 241 dans l'exemple de la figure 1.

De façon générale, la méthode de calcul de descripteur LBP ne permet pas de caractériser les changements d'intensité entre les images correspondantes d'une scène, obtenues avec différents temps d'exposition. Si tous les pixels d'un voisinage ont une intensité diminuée d'un même facteur, le descripteur local calculé pour ce voisinage sera toujours le même.

L'invention propose un procédé de calcul d'un descripteur global d'une image ou d'une partie d'image qui permet d'obtenir un descripteur spatial et spectral conjointement à la différence de la méthode LBP qui ne peut s'appliquer qu'à une seule longueur d'onde à la fois, de façon indépendante. L'invention est applicable à des images multispectrales, notamment des images RGB, ou des images hyperspectrales qui comportent plusieurs longueurs d'ondes allant de trois canaux à plusieurs centaines. Elle permet de calculer un seul descripteur pour tout le domaine spectral disponible de l'image et se démarque des méthodes de l'art antérieur qui appliquent en général un traitement séparé et indépendant pour chaque longueur d'onde. Par ailleurs, l'invention permet de générer une base de descripteurs exhaustive qui comprend tous les motifs qui peuvent être extraits d'une image.

L'invention a pour objet un procédé tel que décrit dans la revendication 1.

Selon un aspect particulier de l'invention, l'étape de simuler une seconde image est réalisée en diminuant l'intensité des pixels de la première image d'un facteur égal au rapport entre le premier temps d'exposition et le second temps d'exposition.

Selon un aspect particulier de l'invention, l'au moins une partie de la première image acquise est composée de pixels dont les valeurs sont toutes différentes entre elles.

Selon un mode de réalisation particulier, le procédé selon l'invention comprend une étape de génération de la première image acquise à partir d'une image multi-spectrale en sélectionnant le nombre minimal de composantes spectrales de l'image nécessaire pour obtenir que l'au moins une partie de la première image acquise est composée de pixels dont les valeurs sont toutes différentes entre elles.

Selon un mode de réalisation particulier, le procédé selon l'invention comprend une étape d'affichage des descripteurs globaux calculés en fonction du second temps d'exposition.

Selon un mode de réalisation particulier, le procédé selon l'invention comprend un calcul d'entropie des descripteurs locaux pour chaque descripteur global calculé et la sélection d'au moins un descripteur global d'au moins une image à décrire en fonction des entropies calculées.

Selon un mode de réalisation particulier, le procédé selon l'invention comprend la sélection du descripteur global dont l'entropie calculée est la plus élevée.

Selon un aspect particulier de l'invention, la classe d'équivalence est une classe de chaines d'étiquettes invariantes par rotation.

Selon un aspect particulier de l'invention, la classe d'équivalence est une classe de chaines d'étiquettes qui est en outre invariante par permutation de valeurs d'étiquettes.

Selon un aspect particulier de l'invention, la classe d'équivalence est une classe de chaines d'étiquettes qui est en outre invariante par symétrie.

Selon un aspect particulier de l'invention, une image à décrire est une image multi-spectrale dont chaque pixel comporte plusieurs composantes à différentes longueurs d'ondes.

L'invention a encore pour objet un programme d'ordinateur comportant des instructions pour l'exécution du procédé de calcul d'un descripteur global selon l'invention, lorsque le programme est exécuté par un processeur et un support d'enregistrement lisible par un processeur sur lequel est enregistré un programme comportant des instructions pour l'exécution du procédé de calcul d'un descripteur global selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un schéma illustrant un exemple de calcul de descripteur local selon une méthode de l'art antérieur,
- La figure 2, un organigramme décrivant les étapes de mise en œuvre d'un procédé selon un premier mode de réalisation de l'invention,
- La figure 3, un schéma illustrant un exemple de calcul de descripteur selon le premier mode de réalisation de l'invention,
- La figure 4, un schéma représentant tous les colliers non-étiquetés de longueur égale à 4 et dans un alphabet à 4 éléments,
- La figure 5, un organigramme décrivant les étapes de mise en œuvre d'un procédé selon un deuxième mode de réalisation de l'invention,
- La figure 6, un exemple d'histogramme à trois dimensions produit par le procédé selon le deuxième mode de réalisation de l'invention,
- La figure 7, un exemple de descripteurs globaux représentés sous forme de séquence d'images pour différents temps d'exposition,
- La figure 8, un organigramme décrivant les étapes de mise en œuvre d'un procédé selon un troisième mode de réalisation de l'invention,
- La figure 9 représente, sur trois diagrammes, un exemple de résultat du procédé décrit à la figure 8,
- La figure 10, plusieurs représentations d'une même image avec un calcul de descripteurs selon l'art antérieur d'une part et un calcul de descripteurs selon le deuxième mode de réalisation de l'invention d'autre part.

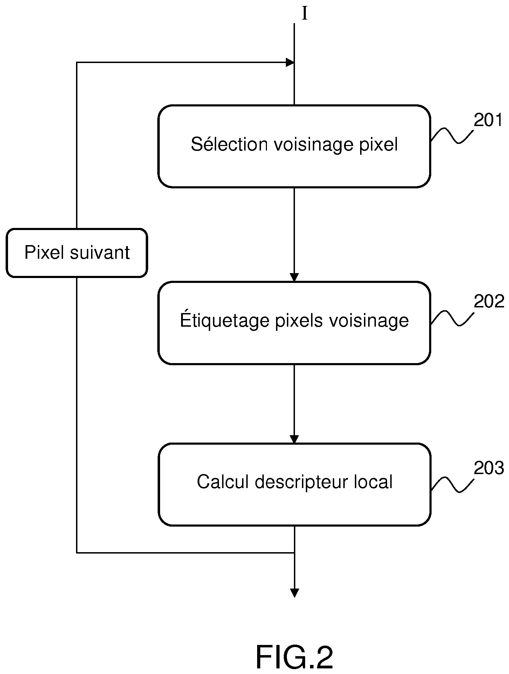

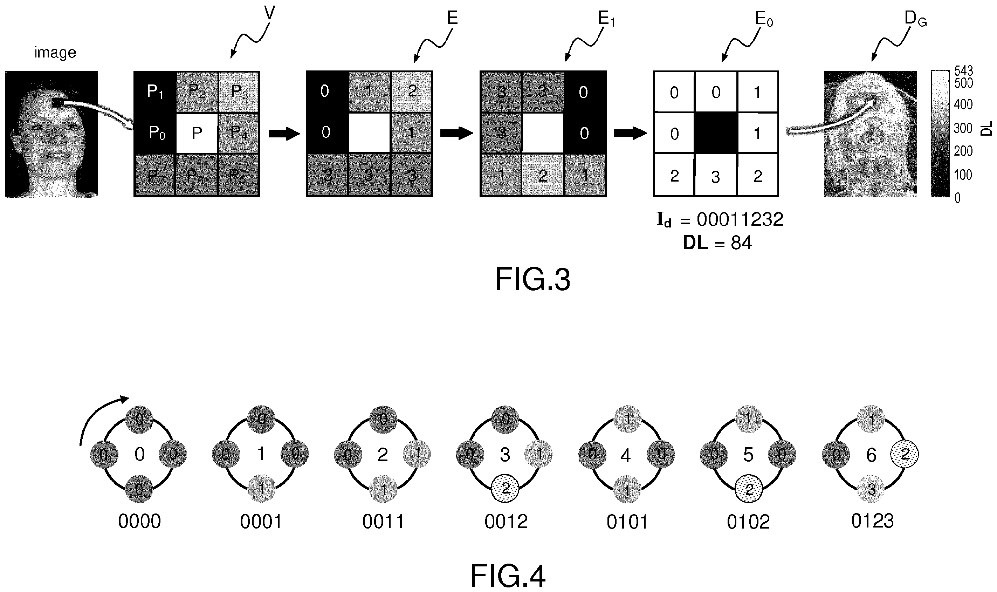

Les figures 2 et 3 illustrent, respectivement sur un organigramme et un schéma, les étapes de mise en œuvre d'un procédé de calcul d'un descripteur global d'une image I ou partie d'image selon un premier mode de réalisation de l'invention.

Un descripteur global est composé d'une pluralité de descripteurs locaux associés chacun à un pixel de l'image I ou d'une zone de l'image que l'on souhaite décrire. La figure 3 illustre le calcul d'un descripteur local pour un pixel P. L'image I considérée peut être une image multi-spectrale, hyper-spectrale ou une image à une seule composante spectrale (image niveau de gris). De façon générale, chaque pixel de l'image est représenté par un vecteur à N composantes spectrales correspondants à N longueurs d'ondes différentes, N étant un entier au moins égal à un.

Dans une première étape 201 on sélectionne un voisinage V du pixel P. Un voisinage est constitué de plusieurs pixels entourant le pixel P. Le pixel P peut être compris dans le voisinage ou en être exclu. Sur la figure 3, on a représenté un exemple particulier de voisinage V qui est égal à une boucle de 8 pixels entourant le pixel P. Alternativement, le voisinage V peut être égal à un motif carré de 2 pixels par 2 pixels, comprenant le pixel P, ou encore à un motif rectangle de 3 pixels par 2 pixels, comprenant le pixel P ou tout autre motif de pixels voisin du pixel P. Sur l'exemple de la figure 3, le voisinage V est composé des pixels $P_0$ à $P_7$.

Dans une deuxième étape 202 du procédé, on détermine une étiquette ou label pour chaque pixel du voisinage V en fonction de la valeur du pixel. Lorsque l'image est monochromatique, la valeur d'un pixel est un nombre entier. Lorsque l'image est multi-spectrale, la valeur d'un pixel est un vecteur à plusieurs composantes. Une étiquette identique est attribuée aux pixels qui présentent exactement les mêmes valeurs. Une étiquette différente est attribuée aux pixels qui présentent des valeurs différentes. Une étiquette est une valeur numérique, par exemple prise dans l'ensemble des nombres entiers $\{0,..,M_P\}$ où $M_P$ est le nombre de pixels du voisinage V. Lorsque l'image I est une image multi-spectrale, la comparaison des valeurs des pixels est effectuée sur toutes les composantes d'un pixel. Autrement dit, une étiquette identique est attribuée aux pixels qui présentent entre eux les mêmes valeurs pour chaque composante spectrale.

Sur l'exemple de la figure 3, les pixels $P_0$ et $P_1$ ont la même valeur, on leur attribue l'étiquette 0. Les pixels $P_2$ et $P_4$ ont la même valeur, on leur attribue l'étiquette 1. Le pixel $P_3$ a une valeur différente de tous les autres pixels, on lui attribue l'étiquette 2. Les pixels $P_5,P_6,P_7$ ont la même valeur, on leur attribue l'étiquette 3. Les étiquettes 0,1,2,3 correspondent ainsi à quatre valeurs différentes de pixels.

A l'issue de l'étape 202, on obtient donc une chaine d'étiquettes E correspondant à une suite de nombres. Dans l'exemple de la figure 3, la chaine E est égale à {0 ;0 ;1 ;2 ;1 ;3 ;3 ;3}, en considérant le pixel $P_0$ comme le premier élément de la chaine, ce choix étant fait par convention. N'importe quel pixel du voisinage V peut être pris comme premier élément de la chaine E, dans la mesure où cette convention est conservée pour tous les pixels de l'image I.

La dernière étape 203 du procédé consiste à attribuer un identifiant à la chaine d'étiquettes E, cet identifiant étant le descripteur local du pixel P. Autrement dit, il s'agit d'identifier la chaine d'étiquettes E avec l'un des motifs de la base de motifs.

Pour cela, on utilise un outil de mathématique combinatoire appelé collier ou « necklace » en anglais. Le document [2] décrit le principe de cet outil mathématique. Un collier de k perles de longueur n est une classe d'équivalence mathématique de suites de n symboles sur un alphabet de taille k, avec k inférieur ou égal à n, invariante par rotation. Autrement dit, un collier est une classe d'équivalence qui comprend plusieurs représentants qui sont tous obtenus par rotation les uns par rapport aux autres.

Un bracelet est un collier particulier, encore appelé collier libre ou collier réversible. Il correspond à une classe d'équivalence sous les trois opérations de rotation (ou décalage circulaire), de symétrie (ou retournement) et de permutation.

Un collier non-étiqueté est un autre collier particulier. Il correspond à une classe d'équivalence sous les deux opérations de rotation (ou décalage circulaire) et de permutation.

Une permutation est une application bijective d'un sous-ensemble s vers un ensemble S global incluant le sous-ensemble s.

Autrement dit, dans le cas d'un collier de k perles de longueur n, une permutation appliquée à un premier représentant du collier pour obtenir un second représentant du collier consiste à permuter les valeurs des symboles du premier représentant sur l'alphabet de k symboles utilisé. Par exemple, si on applique une permutation à l'alphabet {0 ;1 ;2 ;3} pour obtenir {3 ;0 ;1 ;2}, les symboles « 0 » du premier représentant sont remplacés par les symboles « 3 » pour le second représentant et ainsi de suite.

Une définition d'un collier non-étiqueté est, par exemple, donnée au document [3] paragraphe 1.1, par exemple par l'équation (2).

Par la suite, on décrit l'invention en utilisant comme classe d'équivalence, les colliers non-étiquetés. Cependant, l'invention s'applique de façon identique en utilisant comme classe d'équivalence les colliers simples, les bracelets ou toute autre classe d'équivalence comprenant plusieurs représentants obtenus par une transformation mathématique les uns par rapport aux autres.

La figure 4 représente, pour illustration, tous les colliers non-étiquetés possibles pour n=k=4. Un collier non-étiqueté est une classe d'équivalence qui comprend plusieurs représentants. Sur la figure 4, on a illustré, pour chaque collier non-étiqueté, l'un de ses représentants. On obtient 7 colliers non-étiquetés différents possibles invariants par rotation et par permutation des étiquettes. Par exemple le collier non-étiqueté 0 comprend le représentant {0 ;0 ;0 ;0} illustré sur la figure 4 mais aussi les représentants {1 ;1 ;1 ;1}, {2 ;2 ;2 ;2}, {3 ;3 ;3 ;3}. De même, le collier non-étiqueté 6 comprend le représentant {0 ;1 ;2 ;3} illustré sur la figure 4 mais aussi, de manière non exhaustive, les représentants {1 ;2 ;3 ;0}, {2 ;3 ;0 ;1}, {3 ;0 ;1 ; 2}.

On peut, de façon similaire, déterminer les colliers non-étiquetés possibles pour n=k=6 ou n=k=8 ou toute autre valeur de taille de voisinage V.

Le descripteur local est pris égal à l'identifiant d'un représentant de la classe d'équivalence, qui est ici un collier non-étiqueté, à laquelle la chaine d'étiquettes E du voisinage V appartient. Par exemple, l'identifiant d'un représentant est égale à un nombre obtenu à partir de la chaine d'étiquettes du représentant. Par exemple, le représentant choisi est celui qui donne l'identifiant le plus petit.

Sur la figure 3, on a représenté un premier représentant $E_1$ du collier non-étiqueté auquel appartient la chaine d'étiquettes E, ce premier représentant étant obtenu par décalage circulaire de deux valeurs. On a ensuite représenté le représentant $E_0$ choisi pour identifier le collier non-étiqueté et qui est obtenu par permutation des étiquettes du premier représentant $E_1$. La permutation appliquée consiste à transformer l'alphabet {3 ;0 ;1 ;2} en l'alphabet {0 ;1 ;2 ;3}.

L'identifiant du représentant $E_0$ est Id=00011232. Ensuite, on transforme l'identifiant Id en un descripteur local DL=84 qui est le rang du collier non-étiqueté parmi l'ensemble des colliers possibles. L'ensemble des colliers possibles est rangé dans un ordre prédéterminé, par exemple un ordre lexicographique ou tout autre ordre.

Les étapes 201,202,203 sont itérées pour tous les pixels de l'image I ou de la zone de l'image I à représenter.

Lorsque tous les pixels sont parcourus, on obtient un descripteur global de l'image I ou zone de l'image I qui correspond à la concaténation de tous les descripteurs locaux calculés. Ce descripteur global peut être représenté sous la forme d'une image DG dont chaque pixel est égal au descripteur local calculé. Alternativement, le descripteur global peut être un histogramme des valeurs calculées des descripteurs locaux.

Comme indiqué, le procédé décrit aux figures 2 et 3 s'applique à l'identique en remplaçant la classe d'équivalence de type collier non-étiqueté par une classe d'équivalence de type collier simple, bracelet ou autre classe d'équivalence connue de l'Homme du métier.

Une classe d'équivalence de type collier simple comprend toutes les chaines d'étiquettes invariantes par décalage circulaire. Par exemple, pour une telle classe, la chaine {0 ;0 ;1 ;2} est équivalente à la chaine {2 ;0, 0 ;1}.

Une classe d'équivalence de type bracelet comprend toutes les chaines d'étiquettes invariantes par décalage circulaire, symétrie et permutation des étiquettes. Par exemple, pour une telle classe, la chaine {0 ;0 ;1 ;2} est équivalente à la chaine {0 ;1 ;2 ;2} obtenue par permutation d'étiquettes de la chaine {2 ; 1 ; 0 ; 0}.

Un autre exemple est donné par les chaines {0 ;0 ;1 ;0 ;1 ;2} et {0 ;0 ;1 ;2 ;0 ;2} qui appartiennent à deux colliers non-étiquetés différents mais au même bracelet. En effet, si l'on écrit la chaine {0 ;0 ;1 ;0 ;1 ;2} à l'envers (de droite à gauche), on obtient la chaine {2 ;1 ;0 ;1 ;0 ;0} à laquelle on peut appliquer une rotation pour obtenir la chaine {0 ;0 ;2 ;1 ;0 ;1} puis une permutation des étiquettes pour obtenir la chaine {0 ;0 ;1 ;2 ;0 ;2}.

Le calcul d'un descripteur selon le procédé décrit à la figure 2 permet notamment de caractériser les changements d'intensité par rapport à la méthode LBP.

En effet, comme indiqué en préambule, la méthode LBP ne prend pas en compte les changements d'intensité dans une image. Autrement dit, si tous les pixels d'un voisinage sont divisés par la même valeur, les comparaisons entre les pixels du voisinage et le pixel central ne changent pas et donc le descripteur calculé ne change pas non plus.

Cet inconvénient peut être illustré pour l'exemple de la figure 1. Si, par exemple, tous les pixels sont divisés par un facteur 10, les signes « = », «-» ou « + » affectés à chaque pixel du voisinage ne changent pas car les résultats des comparaisons entre ces pixels et le pixel central sont toujours les mêmes.

A l'inverse, en reprenant les valeurs des pixels donnés à la figure 1 et en leur appliquant le procédé selon l'invention décrit à la figure 2, les étiquettes des pixels du voisinage ont toutes des valeurs différentes {0 ;1 ;2 ;3 ;4 ;5 ;6 ;7} puisque tous les pixels du voisinage ont des valeurs différentes {90 ;3 ;7 ;8 ;180 ;140 ;120 ;130}.

Si tous les pixels sont divisés par un facteur 10, leurs valeurs deviennent respectivement {9 ;0 ;0 ;0 ;18 ;14 ;12 ;13} et les étiquettes des pixels deviennent {0 ;1 ;1 ;1 ;2 ;3 ;4}. Ainsi la valeur du descripteur calculé pour un voisinage affecté d'un changement d'intensité global d'un facteur 10 est différente de celle du descripteur calculé avant ce changement d'intensité.

L'invention permet donc de mieux prendre en compte ce type de changement d'intensité par rapport à la méthode LBP.

Un objectif du calcul d'un descripteur, selon l'invention, est de pouvoir caractériser le contenu d'une image, en particulier la texture, les contours ou toute information contenue dans l'image dans le but de permettre une classification du contenu.

On peut remarquer que l'information apportée par le descripteur dépend de la répartition des valeurs des pixels de l'image. Par exemple, si tous les pixels d'une image ont la même valeur, tous les descripteurs locaux auront également la même valeur. A l'inverse, si tous les pixels d'une image ont tous des valeurs différentes, tous les descripteurs locaux auront également la même valeur puisque le calcul d'un descripteur local dépend des différences entre pixels d'un voisinage.

On voit donc que la quantité d'information maximale apportée par le descripteur est obtenue pour une image intermédiaire entre une image dont tous les pixels sont identiques et une image dont tous les pixels sont différents.

Parce que les valeurs des pixels et de leurs différences dépendent du temps de pose, le descripteur local ou motif extrait en dépend également ; on s'intéresse alors ici à la variation locale du motif au cours du temps de pose.

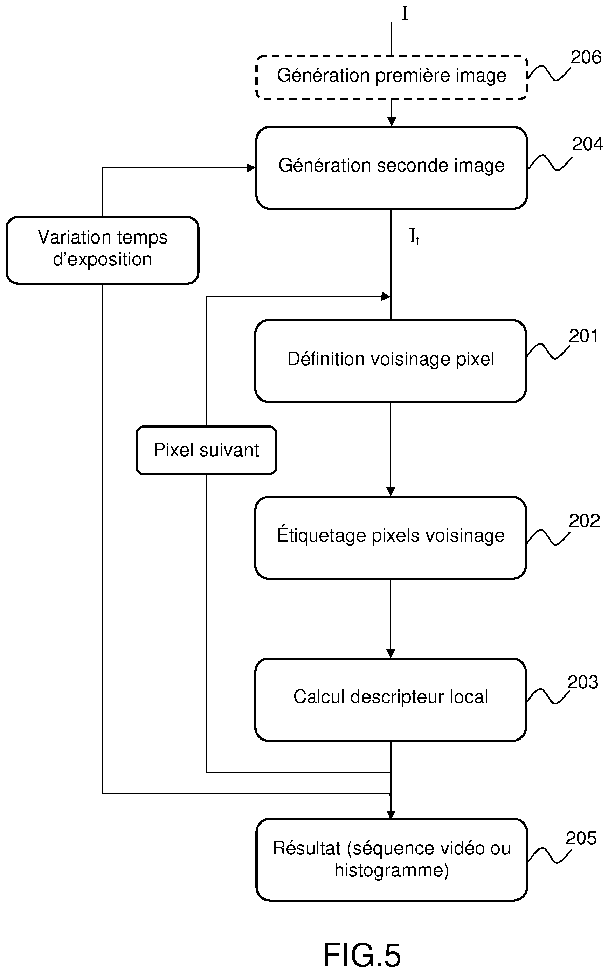

A partir de cette constatation, on propose un deuxième mode de réalisation de l'invention illustré par l'organigramme de la figure 5.

Dans ce deuxième mode, on simule une variation du temps de pose ou durée d'exposition, de l'image I, à différentes valeurs temporelles, puis on calcule un descripteur global de chacune des images obtenues, selon la méthode décrite aux figures 2 et 3.

L'analyse en motifs du contenu d'une image dépend fortement de la dynamique utilisée pour numériser les pixels, autrement dit le nombre de bits par pixels, mais aussi du nombre de canaux dans le cas d'une image multi-spectrale. Par ailleurs, elle dépend également de la durée d'exposition de l'image lors de sa prise de vue. En effet, les contours des objets et formes présents dans la scène apparaissent progressivement en fonction de la durée d'exposition, lors de la prise de vue. De la même manière, les motifs qui peuvent être extraits d'une image à partir des descripteurs calculés selon l'invention, varient également en fonction de la durée d'exposition de l'image lors de son acquisition.

En partant de cette constatation, il est proposé, à partir d'une image I acquise avec un temps d'exposition donné T, de simuler la même image qui aurait été obtenue avec un temps d'exposition inférieur.

On introduit ainsi une étape supplémentaire 204 qui consiste à générer une seconde image It, par simulation de l'acquisition de la même scène que l'image originale I, mais pour un temps d'exposition t inférieur au temps d'exposition T initial.

On calcule un descripteur global pour chacune des images It simulées, selon la méthode décrite à la figure 2. Le temps d'exposition t varie entre 0 et le temps d'exposition T initial.

Différentes méthodes peuvent être envisagées pour simuler une image $I_t$ à un temps d'exposition inférieur au temps d'exposition T réel. Par exemple, un modèle linéaire de quantification peut être utilisé pour calculer la valeur Pt de chaque pixel de la nouvelle image $I_t$ à partir de la valeur P du pixel correspondant de l'image acquise I en utilisant la relation :

Pt= |(t/T).P|, où |.| désigne la fonction partie entière

Plus généralement, le modèle de simulation peut être de tout type, il peut être linéaire ou non linéaire et est basé sur une modélisation de l'imageur utilisé pour la prise de vue de l'image I qui permet de restituer l'image à différents temps d'exposition.

Le nombre d'images simulées est un paramètre de l'invention. Les valeurs des temps d'exposition sont choisies pour suivre une distribution prédéterminée dans l'intervalle [ 0 ;T ]. Par exemple, la distribution peut être une distribution en T*(i/j) avec i et j deux nombres entiers premiers entre eux, i étant strictement inférieur à j. Cette distribution présente l'avantage de comprendre toutes les valeurs possibles de temps d'exposition entre 0 et T et ainsi de permettre une détection de tous les changements d'intensité en fonction du temps de pose. Cette distribution fournit la version la plus détaillée possible de la variation dans le temps d'un descripteur local.

Pour limiter le nombre d'images à simuler, la distribution choisie peut être une distribution en T/i, avec i variant de 1 à une valeur maximum I. Une telle distribution est adaptée à la statistique des intensités des pixels dans une image, en particulier pour la distribution en intensité des scènes naturelles.

A la fin de l'exécution du procédé décrit à la figure 5, on obtient un descripteur global pour chaque temps d'exposition simulé.

Le résultat du procédé peut être produit 205 sous forme de séquence d'images ou séquence vidéo comprenant un descripteur global, représenté sous la forme d'une image, évoluant en fonction du temps entre 0 et le temps d'exposition T de l'image I.

Le résultat du procédé peut aussi être produit 205 sous la forme d'un histogramme à trois dimensions dont la première dimension correspond aux différentes classes d'équivalences possibles (selon le voisinage et le type de classe choisi pour calculer un descripteur local), la deuxième dimension est le temps d'exposition et la troisième dimension est l'intensité de la densité des descripteurs locaux qui peut être exprimée en probabilité ou en occurrence d'apparition de chaque classe d'équivalence parmi les descripteurs locaux calculés.

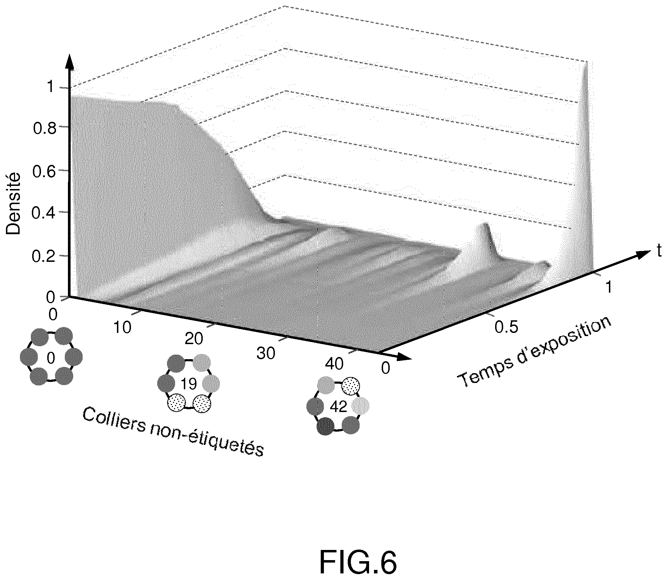

La figure 6 illustre un exemple d'histogramme à trois dimensions, pour un exemple d'image particulier et pour des descripteurs calculés à partir de colliers non-étiquetés de taille n=k=6.

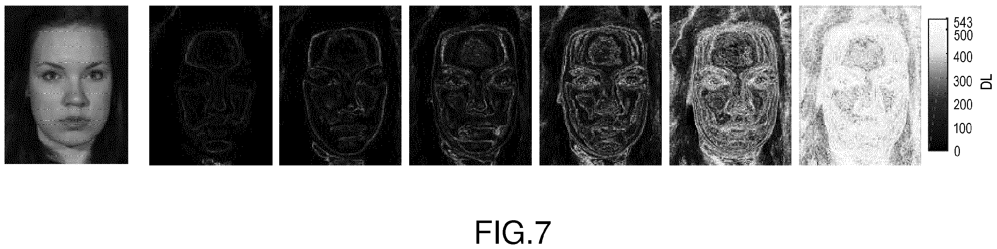

La figure 7 illustre, pour une image particulière, un exemple de séquence de descripteurs globaux représentés sous forme d'images pour différents temps d'exposition. Une image comporte, pour chaque pixel, le descripteur local associé qui a une valeur numérique comprise entre 0 et le nombre maximum de classes d'équivalences possibles.

Le résultat produit par le procédé selon l'invention peut être restitué en étant affiché sur un écran ou toute interface homme machine.

Pour exploiter au mieux la dynamique et le spectre de l'image, l'image correspondant au temps d'exposition maximum simulé doit être une image comprenant des pixels de valeurs toutes différentes avec un nombre de bits par pixels et un nombre de canaux minimum. Autrement dit, l'image correspondant au temps d'acquisition effectif $T_{pose}$ est acquise de telle sorte à ce que tous ses spectres diffèrent significativement par rapport à un modèle standard de bruit. Cela conduit à choisir un nombre de canaux spectraux et une sensibilité photométrique minimale. L'invention convient également pour des images présentant une moindre variabilité des pixels au temps d'acquisition $T_{pose}$ mais conduit alors à une description moins détaillée de la scène. C'est par exemple le cas des images RGB qui présentent typiquement plusieurs fois la même couleur à plusieurs endroits.

Ainsi, dans une variante de réalisation de l'invention, on détermine 206, à partir de l'image I acquise initialement, une autre image qui correspond au temps d'acquisition effectif ou temps de pose effectif $T_{pose}$.

Pour cela, l'image I est réduite à une dynamique prédéterminée, par exemple 256 bits par pixel et à un seul canal. Ensuite, on augmente progressivement le nombre de canaux spectraux jusqu'à obtenir une image multispectrale pour laquelle tous les pixels sont différents. Alternativement, cette condition peut être limitée aux voisinages de chaque pixel de l'image. Dans cette alternative, on augmente le nombre de canaux spectraux jusqu'à obtenir une image pour laquelle tous les pixels sont différents au sein de chaque voisinage d'un pixel.

Dans une autre variante, la dynamique des pixels peut être différente pour différents canaux spectraux. Dans encore une autre variante, la dynamique, c'est-à-dire le nombre de bits par pixel peut être fixé pour l'ensemble des canaux, le nombre de bits par canal étant ainsi diminué lorsque le nombre de canaux augmente.

Une fois que l'image correspondant au temps de pose effectif $T_{pose}$ est acquise l'image pour un temps T inférieur à $T_{pose}$ est simulé en prenant en compte les caractéristiques connues du capteur de l'image, suivant le procédé décrit à la figure 5.

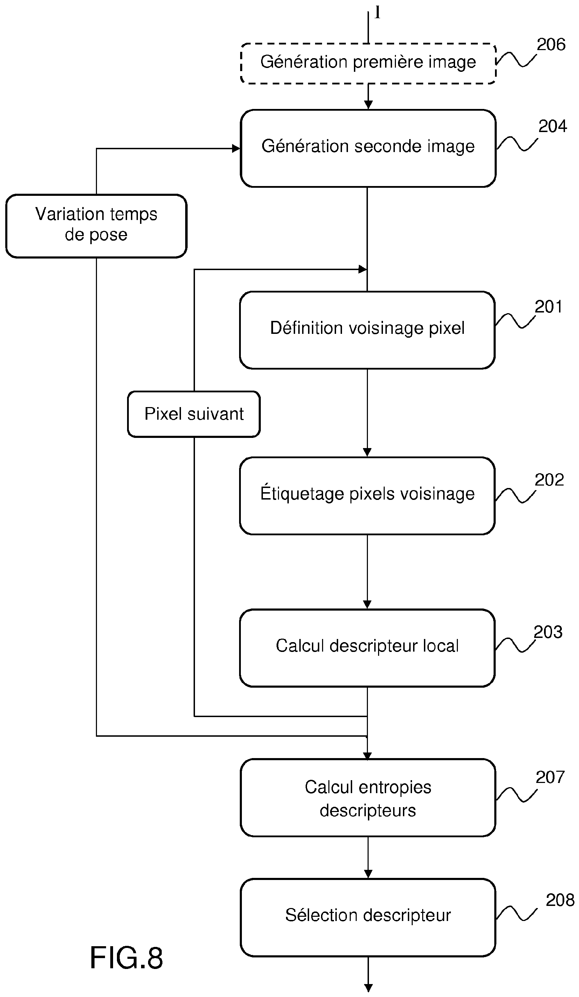

La figure 8 schématise, sur un organigramme, une variante de réalisation de l'invention. Dans cette variante, le procédé tel que décrit à la figure 5 est repris à l'identique puis une étape supplémentaire 207 de calcul de l'entropie de chaque descripteur global est ajoutée. L'entropie de Shannon H(t) de la densité des intensités des descripteurs locaux peut être calculée à l'aide de la relation suivante :

$$H(t) = -\sum_{k=1}^{N_{ce}} \rho(k,t) \log [\rho(k,t)]$$, avec $\rho$

($k$, $t$) la densité d'état des descripteurs locaux, k variant de 1 à $N_{ce}$ où $N_{ce}$ est le nombre de classes d'équivalence différentes.

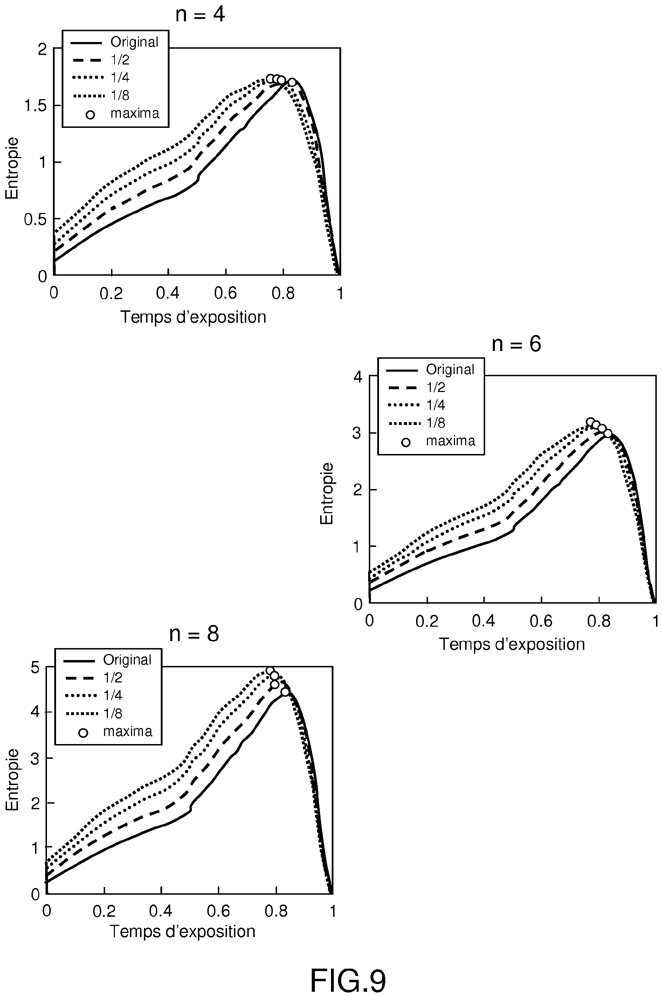

La figure 9 représente, sur trois diagrammes, les entropies en fonction du temps d'exposition ramené au temps d'exposition maximal normalisé (t varie entre 0 et 1). Les trois diagrammes correspondent respectivement, de haut en bas, à des classes d'équivalences de type colliers non-étiquetés de paramètres respectifs n=k=4 ; n=k=6 et n=k=8. Sur chaque diagramme, on a représenté quatre courbes d'entropie calculées respectivement pour la résolution originale de l'image, puis pour des résolutions diminuées respectivement d'un facteur 2, 4 et 8. Les maxima de chaque courbe sont identifiés par un point.

On remarque que l'entropie présente un maximum relativement stable en fonction de la résolution et de la taille du collier non-étiqueté. On voit donc qu'il existe un temps d'exposition optimal pour lequel l'entropie des densités de descripteurs locaux est maximale. On peut en déduire que le descripteur global associé à ce temps d'exposition optimal est celui qui comporte le plus d'information relative au contenu de l'image initiale. On remarque aussi que la valeur de l'entropie maximale augmente avec la taille du collier non-étiqueté.

Dans une dernière étape 208 du procédé décrit à la figure 8, on sélectionne le descripteur global correspondant au temps d'exposition optimal pour lequel l'entropie des descripteurs locaux est maximale.

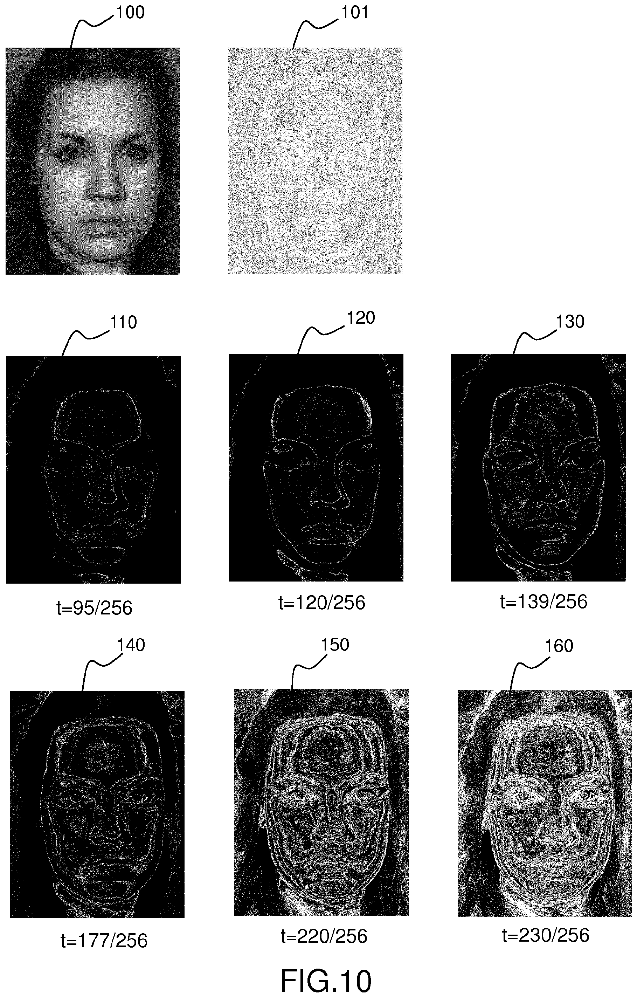

La figure 10 illustre une comparaison de résultats obtenus avec d'une part un calcul de descripteurs selon la méthode de l'art antérieur LBP (image 101) et d'autre part un calcul de descripteurs selon l'invention (images 110-160), pour un exemple d'image.

L'image 100 représentée sur la figure 10 est l'image originale.

L'image 101 est l'image composée des descripteurs locaux calculés pour chaque pixel de l'image 100 par application de la méthode LBP. Les images 110-160 sont composées des descripteurs locaux calculés pour chaque pixel de l'image 100 par application de l'invention et en faisant varier le temps de pose avec les valeurs indiquées en dessous des images 110-160.

Une application possible du calcul de descripteurs de l'image 100 consiste à analyser les descripteurs pour segmenter et classifier certaines zones de l'image et ainsi permettre une reconnaissance automatique de certaines zones de l'image. Dans l'exemple de la figure 10, l'image d'origine 100 est une image d'un visage. Dans cet exemple, on cherche à segmenter les éléments du visage, c'est-à-dire les yeux, les narines, les oreilles et les cheveux, notamment. Cette segmentation permet ensuite d'effectuer une reconnaissance automatique du visage de l'image 100, à partir des descripteurs calculés.

Sur l'image 101, obtenue par application de la méthode LBP, on remarque que les informations relatives aux différentes caractéristiques du visage sont mélangées. En outre, certains éléments du visage ne sont pas segmentables, par exemple les narines, car les descripteurs calculés pour ces éléments sont trop proches de descripteurs calculés pour d'autres parties du visage. Cela est du, notamment, au fait que la méthode LBP ne permet pas de sélectionner un temps de pose optimal pour obtenir un niveau d'information maximal pour les descripteurs calculés.

A l'inverse, la méthode selon l'invention permet de générer plusieurs descripteurs 110-160 pour différents temps de pose. Grâce à cet aspect de l'invention, un temps de pose optimal peut être sélectionné en fonction de l'information que l'on cherche à classifier dans l'image. Par ailleurs, l'invention permet aussi de gérer de manière conjointe les différents canaux spectraux de l'image ce qui favorise une meilleure segmentation des détails de l'image.

Ainsi, on remarque par exemple que le descripteur représenté par l'image 140 permet une meilleure segmentation des narines que le descripteur représenté par l'image 101.

Sans sortir du cadre de l'invention, de nombreuses applications sont envisageables pour analyser des caractéristiques d'une image de façon automatique, à partir des descripteurs calculés. Par exemple, il est possible de comparer deux images en comparant les histogrammes des descripteurs calculés pour chacune des deux images.

Le procédé selon l'invention peut être mis en œuvre en tant que programme d'ordinateur, le procédé étant appliqué à une image I préalablement acquise à l'aide d'un capteur d'image, par exemple un appareil photo, une caméra ou une caméra multispectrale.

L'invention peut être mise en œuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la

EP 3 698 274 B1

mémoire morte ou bien dans les autres éléments de stockage précités.

Les résultats du procédé selon l'invention peuvent être affichés sur un écran ou toute autre interface homme machine.

<u>Références</u>

[1] M.Pietikäinen, A. Hadid, G. Zhao, and T. Ahonen, Local binary patterns for still images, Springer, 2011.
[2] Jean-Philippe Gagnon, « Colliers et bracelets dont les perles importent peu », Faculté des sciences et de Génie, Université Laval Québec.
[3] Cattell, K., Ruskey, F., Sawada, J., Miers, C. R., & Serra, M. (1998). « Generating Unlabeled Necklaces and Irreducible Polynomials over GF (2) ». Department of Computer Science, University of Victoria, Canada.

**Revendications**

**1.** Procédé, mis en œuvre par ordinateur, de calcul d'un descripteur global (DG) d'au moins une partie d'une image à décrire (I), le descripteur global (DG) comprenant un descripteur local (DL) associé à chaque pixel de l'au moins une partie d'image à décrire, le procédé comprenant les étapes de :

- Obtenir (206) une première image acquise avec un premier temps d'exposition,
- Simuler (204) au moins une seconde image résultant d'une prise de vue de la première image avec au moins un second temps d'exposition inférieur au premier temps d'exposition,
- Calculer un descripteur global pour au moins une partie d'une image à décrire prise parmi la première image acquise et l'au moins une seconde image simulée, le procédé comprenant le calcul de tous les descripteurs locaux du descripteur global en :

i. Définissant (201) un voisinage du pixel associé au descripteur local,
ii. Attribuant (202) une étiquette à chaque pixel du voisinage, deux pixels de valeurs différentes ayant deux étiquettes différentes, deux pixels de valeurs identiques ayant la même étiquette, l'ensemble des étiquettes du voisinage formant un motif (E),
iii. Affectant (203) la valeur du descripteur local à un représentant d'une classe d'équivalence à laquelle appartient le motif (E).

- faire varier le second temps d'exposition entre le premier temps d'exposition et zéro et itérer les étapes de simuler au moins une seconde image et de calculer un descripteur global.

**2.** Procédé de calcul d'un descripteur global selon la revendication 1 dans lequel l'étape de simuler (204) une seconde image est réalisée en diminuant l'intensité des pixels de la première image d'un facteur égal au rapport entre le premier temps d'exposition et le second temps d'exposition.

**3.** Procédé de calcul d'un descripteur global selon l'une des revendications 1 ou 2 dans lequel l'au moins une partie de la première image acquise est composée de pixels dont les valeurs sont toutes différentes entre elles.

**4.** Procédé de calcul d'un descripteur global selon la revendication 3 comprenant une étape de génération (206) de la première image acquise à partir d'une image multi-spectrale en sélectionnant le nombre minimal de composantes spectrales de l'image nécessaire pour obtenir que l'au moins une partie de la première image acquise est composée de pixels dont les valeurs sont toutes différentes entre elles.

**5.** Procédé de calcul d'un descripteur global selon l'une quelconque des revendications précédentes comprenant une étape d'affichage (205) des descripteurs globaux calculés en fonction du second temps d'exposition.

**6.** Procédé de calcul d'un descripteur global selon l'une quelconque des revendications précédentes comprenant un calcul d'entropie (207) des descripteurs locaux pour chaque descripteur global calculé et la sélection (208) d'au moins un descripteur global d'au moins une image à décrire en fonction des entropies calculées.

**7.** Procédé de calcul d'un descripteur global selon la revendication 6 comprenant la sélection (208) du descripteur global dont l'entropie calculée est la plus élevée.

**8.** Procédé de calcul d'un descripteur global selon l'une des revendications précédentes dans lequel la classe d'équivalence est une classe de chaines d'étiquettes invariantes par rotation.

**9.** Procédé de calcul d'un descripteur global selon la revendication 8 dans lequel la classe d'équivalence est une classe de chaines d'étiquettes qui est en outre invariante par permutation de valeurs d'étiquettes.

**10.** Procédé de calcul d'un descripteur global selon l'une des revendications 8 ou 9 dans lequel la classe d'équivalence est une classe de chaines d'étiquettes

9

qui est en outre invariante par symétrie.

11. Procédé de calcul d'un descripteur global selon l'une des revendications précédentes dans lequel une image à décrire est une image multi-spectrale dont chaque pixel comporte plusieurs composantes à différentes longueurs d'ondes.

12. Programme d'ordinateur comportant des instructions pour l'exécution du procédé de calcul d'un descripteur global selon l'une quelconque des revendications 1 à 11, lorsque le programme est exécuté par un processeur.

13. Support d'enregistrement lisible par un processeur sur lequel est enregistré un programme comportant des instructions pour l'exécution du procédé de calcul d'un descripteur global selon l'une quelconque des revendications 1 à 11, lorsque le programme est exécuté par un processeur.

**Patentansprüche**

1. Verfahren, das von einem Computer ausgeführt wird, zum Berechnen eines globalen Deskriptors (DG) mindestens eines Teils eines zu beschreibenden Bildes (I), wobei der globale Deskriptor (DG) einen lokalen Deskriptor (DL) umfasst, der jedem Pixel des mindestens einen Teils des zu beschreibenden Bildes zugeordnet ist, wobei das Verfahren die folgenden Schritte umfasst:

- Erhalten (206) eines ersten Bildes, das mit einer ersten Belichtungszeit erfasst wurde,
- Simulieren (204) mindestens eines zweiten Bildes, das aus einer Bildaufnahme des ersten Bildes mit mindestens einer zweiten Belichtungszeit kürzer als die erste Belichtungszeit resultiert,
- Berechnen eines globalen Deskriptors für mindestens einen Teil eines zu beschreibenden Bildes, der von dem ersten erfassten Bild und dem mindestens einen zweiten simulierten Bild genommen wurde, wobei das Verfahren das Berechnen aller lokalen Deskriptoren des globalen Deskriptors umfasst, durch:

i. Definieren (201) einer Nachbarschaft des dem lokalen Deskriptor zugeordneten Pixels,
ii. Zuordnen (202) eines Labels zu jedem Pixel der Nachbarschaft, wobei zwei Pixel mit verschiedenen Werten zwei unterschiedliche Label aufweisen, wobei zwei Pixel mit identischen Werten das gleiche Label aufweisen, wobei die Gesamtheit der Label der Nachbarschaft ein Muster (E) bildet,
iii. Zuweisen (203) des Wertes des lokalen Deskriptors zu einem Vertreter einer Äquivalenzklasse, zu der das Muster (E) gehört,

- Variieren der zweiten Belichtungszeit zwischen der ersten Belichtungszeit und Null und Wiederholen der Schritte des Simulierens mindestens eines zweiten Bildes und des Berechnens eines globalen Deskriptors.

2. Verfahren zum Berechnen eines globalen Deskriptors nach Anspruch 1, wobei der Schritt des Simulierens (204) eines zweiten Bildes durch Verringern der Intensität der Pixel des ersten Bildes um einen Faktor gleich dem Verhältnis der ersten Belichtungszeit zu der zweiten Belichtungszeit ausgeführt wird.

3. Verfahren zum Berechnen eines globalen Deskriptors nach einem der Ansprüche 1 oder 2, wobei der mindestens eine Teil des ersten erfassten Bildes aus Pixeln zusammengesetzt ist, deren Werte alle untereinander unterschiedlich sind.

4. Verfahren zum Berechnen eines globalen Deskriptors nach Anspruch 3, umfassend einen Schritt zum Erzeugen (206) des ersten erfassten Bildes aus einem Multispektralbild durch Auswählen der Mindestanzahl an spektralen Komponenten des Bildes, die notwendig ist, um zu erreichen, dass der mindestens eine Teil des ersten erfassten Bildes aus Pixeln zusammengesetzt ist, deren Werte alle untereinander unterschiedlich sind.

5. Verfahren zum Berechnen eines globalen Deskriptors nach einem der vorhergehenden Ansprüche, umfassend einen Schritt zum Anzeigen (205) der berechneten globalen Deskriptoren in Abhängigkeit von der zweiten Belichtungszeit.

6. Verfahren zum Berechnen eines globalen Deskriptors nach einem der vorhergehenden Ansprüche, umfassend eine Entropieberechnung (207) der lokalen Deskriptoren für jeden berechneten globalen Deskriptor und das Auswählen (208) mindestens eines globalen Deskriptors aus mindestens einem zu beschreibenden Bild in Abhängigkeit von den berechneten Entropien.

7. Verfahren zum Berechnen eines globalen Deskriptors nach Anspruch 6, umfassend das Auswählen (208) des globalen Deskriptors, dessen berechnete Entropie die höchste ist.

8. Verfahren zum Berechnen eines globalen Deskriptors nach einem der vorhergehenden Ansprüche, wobei die Äquivalenzklasse eine Klasse von Labelketten ist, die rotationsinvariant sind.

9. Verfahren zum Berechnen eines globalen Deskriptors nach Anspruch 8, wobei die Äquivalenzklasse eine Klasse von Labelketten ist, die des Weiteren invariant bezüglich der Permutation von Labelwerten sind.

10. Verfahren zum Berechnen eines globalen Deskriptors nach einem der Ansprüche 8 oder 9, wobei die Äquivalenzklasse eine Klasse von Labelketten ist, die des Weiteren symmetrieinvariant sind.

11. Verfahren zum Berechnen eines globalen Deskriptors nach einem der vorhergehenden Ansprüche, wobei ein zu beschreibendes Bild ein Multispektralbild ist, bei dem jedes Pixel mehrere Komponenten mit verschiedenen Wellenlängen aufweist.

12. Computerprogramm, aufweisend Anweisungen zum Ausführen des Verfahrens zum Berechnen eines globalen Deskriptors nach einem der Ansprüche 1 bis 11, wenn das Programm von einem Prozessor ausgeführt wird.

13. Speichermedium, das von einem Prozessor lesbar ist, auf dem ein Programm gespeichert ist, das Anweisungen zum Ausführen des Verfahrens zum Berechnen eines globalen Deskriptors nach einem der Ansprüche 1 bis 11 aufweist, wenn das Programm von einem Prozessor ausgeführt wird.

## Claims

1. A computer-implemented method for computing a global descriptor (DG) of at least one portion of an image (I) to be described, the global descriptor (DG) comprising a local descriptor (DL) associated with each pixel of the at least one portion of an image to be described, the method comprising the following steps of:

   - obtaining (206) a first image acquired with a first exposure time;
   - simulating (204) at least one second image resulting from taking the first image with at least a second exposure time shorter than the first exposure time;
   - computing a global descriptor for at least one portion of an image to be described taken from among the first acquired image and the at least one second simulated image, the method comprising computing all the local descriptors of the global descriptor by:

      i. defining (201) a neighbourhood of the pixel associated with the local descriptor;
      ii. assigning (202) a label to each pixel of the neighbourhood, with two pixels with different values having two different labels, two pixels with identical values having the same label, with the set of labels of the neighbourhood forming a pattern (E);
      iii. assigning (203) the value of the local descriptor to a representative of an equivalence class to which the pattern (E) belongs;

   - varying the second exposure time between the first exposure time and zero and repeating the steps of simulating at least one second image and computing a global descriptor.

2. The method for computing a global descriptor according to claim 1, wherein the step (204) of simulating a second image is carried out by decreasing the intensity of the pixels of the first image by a factor equal to the ratio between the first exposure time and the second exposure time.

3. The method for computing a global descriptor according to any of claim 1 or 2, wherein the at least one portion of the first acquired image is made up of pixels whose values are all different from each other.

4. The method for computing a global descriptor according to claim 3, comprising a step of generating (206) the first acquired image from a multi-spectral image by selecting the minimum number of spectral components of the image that is required to achieve that the at least one portion of the first acquired image is made up of pixels whose values are all different from each other.

5. The method for computing a global descriptor according to any one of the preceding claims, comprising a step of displaying (205) the computed global descriptors as a function of the second exposure time.

6. The method for computing a global descriptor according to any one of the preceding claims, comprising computing (207) the entropy of the local descriptors for each computed global descriptor and selecting (208) at least one global descriptor of at least one image to be described as a function of the computed entropies.

7. The method for computing a global descriptor according to claim 6, comprising selecting (208) the global descriptor with the highest computed entropy.

8. The method for computing a global descriptor according to any of the preceding claims, wherein the equivalence class is a class of rotation-invariant label strings.

9. The method for computing a global descriptor according to claim 8, wherein the equivalence class is a class of label strings that is also permutation-invariant for label values.

10. The method for computing a global descriptor according to any of claim 8 or 9, wherein the equivalence class is a class of label strings that is also symmetry-invariant.

11. The method for computing a global descriptor according to any of the preceding claims, wherein an image to be described is a multi-spectral image, each pixel of which contains several components with different wavelengths.

12. A computer program comprising instructions for executing the method for computing a global descriptor according to any one of claims 1 to 11, when the program is executed by a processor.

13. A processor-readable storage medium storing a program containing instructions for executing the method for computing a global descriptor according to any one of claims 1 to 11, when the program is executed by a processor.

| 90 | 3 | 7 |
|---|---|---|
| 130 | 90 | 8 |
| 120 | 140 | 180 |

| = | - | - |
|---|---|---|
| + | | - |
| + | + | + |

| 1 | 0 | 0 |
|---|---|---|
| 1 | | 0 |
| 1 | 1 | 1 |

| 1 | 2 | 4 |
|---|---|---|
| 128 | | 8 |
| 64 | 32 | 16 |

**Motifs** = 1000111

**LBP** = 1 + 16 + 32 + 64 + 128 = 241

FIG.1

FIG.2

FIG.3

$I_d$ = 00011232
**DL** = 84

FIG.4

I

```
┌ ─ ─ ─ ─ ─ ─ ─ ─ ─ ─ ─ ─ ─ ─ ─ ─ ┐
   Génération première image          ⟩ 206
└ ─ ─ ─ ─ ─ ─ ─ ─ ─ ─ ─ ─ ─ ─ ─ ─ ┘
```

Génération seconde image   ⟩ 204

$I_t$

Variation temps d'exposition

Définition voisinage pixel   ⟩ 201

Pixel suivant

Étiquetage pixels voisinage   ⟩ 202

Calcul descripteur local   ⟩ 203

Résultat (séquence vidéo ou histogramme)   ⟩ 205

FIG.5

FIG.6

FIG.7

I

Génération première image ⟶ 206

Génération seconde image ⟶ 204

Variation temps de pose

Définition voisinage pixel ⟶ 201

Pixel suivant

Étiquetage pixels voisinage ⟶ 202

Calcul descripteur local ⟶ 203

Calcul entropies descripteurs ⟶ 207

Sélection descripteur ⟶ 208

FIG.8

FIG.9

t=95/256     t=120/256     t=139/256

t=177/256     t=220/256     t=230/256

FIG.10

## RÉFÉRENCES CITÉES DANS LA DESCRIPTION

**Documents brevets cités dans la description**

- EP 1850270 A

- US 6711293 B

**Littérature non-brevet citée dans la description**

- **MATTI PIETIKAINEN**. *Computer Vision using Local Binary Patterns*
- **OJALA T**. *Multiresolution gray-scale and rotation invariant texture classification with local binary patterns*
- *Rotation-invariant texture classification using feature distributions*, 2000
- **M.PIETIKÄINEN** ; **A. HADID** ; **G. ZHAO** ; **T. AHONEN**. Local binary patterns for still images. Springer, 2011

- **JEAN-PHILIPPE GAGNON**. Colliers et bracelets dont les perles importent peu. Faculté des sciences et de Génie, Université Laval Québec
- **CATTELL, K.** ; **RUSKEY, F.** ; **SAWADA, J.** ; **MIERS, C. R.** ; **SERRA, M.** Generating Unlabeled Necklaces and Irreducible Polynomials over GF (2). Department of Computer Science, University of Victoria, Canada, 1998